Europäisches Patentamt

(19) European Patent Office

Office européen des brevets

(11) Numéro de publication: **0 254 615**
**B1**

(12) **FASCICULE DE BREVET EUROPEEN**

(45) Date de publication du fascicule du brevet: **12.12.90**

(51) Int. Cl.⁵: **C 08 F 14/06,** C 08 F 2/16, C 08 F 259/04

(21) Numéro de dépôt: **87401507.6**

(22) Date de dépôt: **30.06.87**

(54) **Procédé de préparation en émulsion ou en microsuspension d'homo-et co-polymères du chlorure de vinyle.**

(30) Priorité: **11.07.86 FR 8610204**

(43) Date de publication de la demande:
**27.01.88 Bulletin 88/04**

(45) Mention de la délivrance du brevet:
**12.12.90 Bulletin 90/50**

(84) Etats contractants désignés:
**BE DE ES FR GB IT NL**

(56) Documents cités:
**DE-B-1 076 373**
**FR-A-2 309 569**
**GB-A-1 093 866**

(73) Titulaire: **ATOCHEM**
**4 & 8, Cours Michelet La Défense 10**
**F-92800 Puteaux (FR)**

(72) Inventeur: **Brulet, Daniel**
**Mas de Crapon Communay**
**F-69360 Saint Symphorien D'Ozon (FR)**

Courier Press, Leamington Spa, England.

**Description**

La présente invention a pour objet un procédé de préparation d'homo- et co-polymères du chlorure de vinyle, sous forme de latex, par polymérisation en émulsion ou en microsuspension du ou des monomères correspondants. Elle a également pour objet les latex en résultant ainsi que les homo- et co-polymères issus desdits latex.

Par polymérisation en émulsion on entend une polymérisation, en présence d'initiateur(s) hydrosoluble(s), d'au moins un monomère ajouté à un milieu aqueux contenant au moins un émulsifiant.

Par polymérisation en microsuspension on entend une polymérisation, en présence d'initiateur(s) organosoluble(s), d'au moins un monomère dispersé par des moyens mécaniques énergiques dans un milieu auqueux contenant au moins un émulsifiant. Comme moyens mécaniques énergiques on peut citer, par exemple, les moulins à colloïdes, les pompes rapides, les agitateurs à vibrations et les appareils à ultrasons.

La polymérisation en émulsion ou en microsuspension est habituellement réalisée en portant et en maintenant le milieu réactionnel sous pression autogène et agitation modérée, à température généralement comprise entre 10 et 85°C et de préférence entre 30 et 70°C. Après la baisse de pression la réaction est arrêtée et le ou les monomères non transformés sont éliminés par dégazage du polymérisat formé.

Les procédés de préparation d'homo- et co-polymères du chlorure de vinyle, par polymérisation en émulsion ou en microsuspension du ou des monomères correspondants, sont mis en oeuvre dans des réacteurs généralement munis d'une double enveloppe à circulation de fluide et équipés d'un agitateur à pales, à arbre rotatif, et d'au moins un déflecteur. La vitesse périphérique de rotation de l'agitateur et la distance radiale entre la périphérie des pales et le déflecteur sont telles que le gradient de vitesse entre les pales et le déflecteur est compris entre 5 et 50 s$^{-1}$. Lesdits réacteurs sont également équipés d'un réfrigérant condenseur dont le rôle est d'extraire du milieu réactionnel une partie de la chaleur provenant de la réaction de polymérisation, l'autre partie étant extraite au moyen du fluide de circulation de la double enveloppe. Ledit réfrigérant condenseur est généralement à reflux, c'est-à-dire que la phase liquéfiée provenant de la condensation continue des vapeurs issues du milieu réactionnel reflue de façon continue dans ledit milieu réactionnel.

Selon les procédés, utilisés jusqu'alors, de préparation d'homo- et co-polymères du chlorure de vinyle, par polymérisation en émulsion ou en microsuspension du ou des monomères correspondants, on maintient la vitesse périphérique de rotation de l'agitateur à une valeur constante de 1 à 2 m/s pendant toute la durée de l'opération de polymérisation et de l'opération de dégazage du polymérisat (voir notamment les Exemples des brevets FR 2 286 152 et FR 2 309 569). Ces procédés conduisent à la formation d'une certaine quantité de croûtes. Si on opère à vitesse périphérique de rotation de l'agitateur inférieure à 1 m/s on obtient une quantité de croûtes plus faible mais la durée de polymérisation devient trop élevée et le taux de transformation du ou des monomères mis en oeuvre devient trop faible.

Le procédé objet de l'invention permet, par réglage approprié, toutes choses égales par ailleurs, de la vitesse périphérique de rotation de l'agitateur, de réduire la quantité de croûtes formées, sans diminuer le taux de transformation du ou des monomères mis en oeuvre et sans conduire à une durée de polymérisation plus élevée.

Selon le procédé de l'invention on réalise sous agitation une opération de polymérisation en émulsion ou en microsuspension du ou des monomères correspondants, éventuellement en présence d'au moins un produit d'ensemencement, en intensifiant les échanges thermiques par condensation continue d'une fraction de la composition monomère mise en oeuvre, à l'état de vapeurs issues du milieu réactionnel, et par reflux continu dans ledit milieu de cette composition liquéfiée, puis réalise, également sous agitation, une opération de dégazage du polymérisat formé, l'agitation étant assurée au moyen d'un agitateur à pales, à arbre rotatif, et d'au moins un déflecteur, le gradient de vitesse entre les pales et le déflecteur étant compris entre 5 et 50 s$^{-1}$.

Selon le procédé de l'invention, $P_1$ étant la période de polymérisation qui précède le début du reflux, $P_2$ la période de reflux, $P_3$ la période qui sépare la fin du reflux et le début du dégazage, $P_4$ la période de dégazage, on maintient la vitesse périphérique de rotation de l'agitateur dans l'intervalle de 1,1 à 2,1 m/s pendant 50 à 100% de la durée de chacune des périodes $P_1$ et $P_3$ et dans l'intervalle de 0,4 à 1,0 m/s pendant 50 à 100% de la durée de chacune des périodes $P_2$ et $P_4$.

A titre préférentiel on maintient la vitesse périphérique de rotation de l'agitateur dans l'intervalle de 1,1 à 2,1 m/s pendant 80 à 100% de la durée de chacune des périodes $P_1$ et $P_3$ et dans l'intervalle de 0,4 à 1,0 m/s pendant 80 à 100% de la durée de chacune des périodes $P_2$ et $P_4$.

A titre plus préférentiel on maintient la vitesse périphérique de rotation de l'agitateur dans l'intervalle de 1,1 à 2,1 m/s pendant 90 à 100% de la durée de chacune des périodes $P_1$ et $P_3$ et dans l'intervalle de 0,4 à 1,0 m/s pendant 90 à 100% de la durée de chacune des périodes $P_2$ et $P_4$.

La demanderesse a en effet trouvé qu'en maintenant, toutes choses égales par ailleurs, la vitesse périphérique de rotation de l'agitateur dans deux intervalles distincts déterminés pendant une proportion suffisamment élevée, pouvant aller jusqu'à 100%, de la durée de chacune des périodes $P_1$ et $P_3$ d'une part et de la durée de chacune des périodes $P_2$ et $P_4$ d'autre part, il est possible de réduire la quantité de croûtes formées, sans diminuer le taux de transformation du ou des monomères mis en oeuvre et sans conduire à une durée de polymérisation plus élevée.

Pendant la fraction complémentaire éventuelle de la durée de chacune des périodes $P_1$ et $P_3$, on maintient la vitesse périphérique de rotation de l'agitateur de préférence au moins égale à 1,0 m/s.

Pendant la fraction complémentaire éventuelle de la durée de chacune des périodes $P_2$ et $P_4$, on maintient la vitesse périphérique de rotation de l'agitateur de préférence au plus égale à 1,1 m/s.

Par polymères du chlorure de vinyle on retend les homo- et co-polymères, ces derniers contenant au moins 50% en poids de chlorure de vinyle et au moins un monomère copolymérisable avec le chlorure de vinyle. Les monomères copolymérisables sont ceux généralement employés dans les techniques classiques de copolymérisation du chlorure de vinyle. On peut citer les esters vinyliques des acides mono- et poly-carboxyliques, tels que acétate, propionate, benzoate de vinyle; les acides insaturés mono- et poly-carboxyliques, tels que acrylique, méthacrylique, maléique, fumarique, itaconique, ainsi que leurs esters aliphatiques, cycloaliphatiques, aromatiques, leurs amides, leurs nitriles; les halogénures d'allyle, de vinyle, de vinylidène; les alkylvinyléthers; les oléfines.

Comme initiateurs de polymérisation hydrosolubles on peut citer tous les initiateurs susceptibles d'être mis en oeuvre pour la préparation en émulsion des polymères du chlorure de vinyle et représentés par le peroxyde d'hydrogène, les persulfates des métaux alcalins, le persulfate d'ammonium, les perborates des métaux alcalins, le perborate d'ammonium, l'hydroperoxyde de tertiobutyle, l'azobisisobutyronitrile. Ils sont employés en quantité généralement comprise entre 0,01 et 1%, en poids par rapport au(x) monomère(s) mis en oeuvre. Ces initiateurs sont éventuellement associés à un réducteur hydrosoluble tel que, par exemple, le formladéhyde sulfoxylate de sodium, le sulfite de sodium, le métabisulfite de sodium, le thiosulfate de sodium.

Comme initiateurs de polymérisation organosolubles on peut citer tous les initiateurs susceptibles d'être mis en oeuvre pour la préparation en microsuspension des polymères du chlorure de vinyle et représentés par les générateurs de radicaux libres tels que des peroxydes organiques comme le peroxyde de lauroyle, le peroxyde d'acétylcyclohexanesulfonyle, le peroxyde d'isobutyroyle, le peroxyde de dichloracétyle, le peroxyde de trichloracétyle; des peroxydicarbonates comme le peroxydicarbonate d'éthyle, le peroxydicarbonate d'éthyle hexyle, le peroxydicarbonate d'isopropyle, le peroxydicarbonate d'isobutyle; le perméthoxyacétate de tertiobutyle; le peréthoxyacétate de tertiobutyle; le perphénoxy-2-propionate de tertiobutyle. Ils sont employés en des proportions généralement de 0,05 à 3%, en poids par rapport au(x) monomère(s) mis en oeuvre.

Comme émulsifiants on peut citer en particulier les émulfiants anioniques représentés de préférence par les savons d'acides gras, les alkylsulfates alcalins, les alkylsulfonates alcalins, les alkylarylsulfonates alcalins, les alkylsulfosuccinates alcalins, les alkylphosphates alcalins. Ils sont éventuellement associés à des émulsifiants non ioniques représentés de préférence par les polycondensats d'oxyde d'éthylène et/ou de propylène sur divers composés organiques hydroxylés tels que les alcools gras et les nonylphénols. Les émulsifiants sont mis en oeuvre en des proportions généralement comprises entre 0,3 et 4% et de préférence entre 0,5 et 2%, en poids par rapport au(x) monomère(s) mis en oeuvre.

La quantité d'eau à mettre en oeuvre selon le procédé de l'invention est telle que la teneur initiale en monomère(s) plus, le cas échéant, le ou les polymères d'ensemencement, compte tenu de la teneur en eau du produit d'ensemencement, est généralement comprise entre 20 et 80% et de préférence entre 45 et 75% en poids par rapport au mélange réactionnel.

L'opération de polymérisation est réalisée habituellement sous pression autogène, en portant et en maintenant le milieu réactionnel à température généralement comprise entre 10 et 85°C et de préférence entre 30 et 70°C. On peut faire varier la température de polymérisation pendant la réaction.

La polymérisation peut être réalisée avec ou sans ensemencement.

La polymérisation en émulsion avec ensemencement peut être réalisée notamment selon la technique décrite dans le brevet français n° 74.32094 publié sous le n° 2286152. Selon cette technique, qui met en oeuvre un produit d'ensemencement, ledit produit d'ensemencement est sous forme d'un latex de polymère du chlorure de vinyle préparé préalablement par polymérisation en émulsion et la polymérisation est réalisée en présence d'un émulsifiant dont la nature chimique est différente de celle l'émulsifiant mis en oeuvre pour préparer le produit d'ensemencement.

La polymérisation en microsuspension avec ensemencement peut être réalisée notamment selon la technique décrite dans le brevet français n° 1485547. Selon cette technique, qui met en oeuvre un produit d'ensemencement, ledit produit d'ensemencement est sous forme d'un latex de polymère du chlorure de vinyle, préparé préalablement par polymérisation en microsuspension, dont les particules renferment la totalité de l'initiateur nécessaire à la polymérisation.

La polymérisation en microsuspension avec ensemencement peut être réalisée notamment selon la technique décrite dans le brevet français n° 75.13582 publié sous le n° 2309569. Selon cette technique, qui met en oeuvre deux produits d'ensemencement, les deux produits d'ensemencement sont sous forme de latex du chlorure de vinyle de taille de particules différente. Les particules de l'un au moins des produits d'ensemencement, préparé préalablement par polymérisation en microsuspension, renferment la totalité de l'initiateur nécessaire à la polymérisation.

Pour augmenter la vitesse de polymérisation en microsuspension en présence d'au moins un produit d'ensemencement renfermant la totalité de l'initiateur nécessaire à la polymérisation il est recommandé d'activer l'initiateur par un complexe métallique hydrosoluble et un agent complexant introduit progressivement, ainsi qu'il est décrit dans le brevet français n° 73.20882 publié sous le n° 2234321. Le sel métallique est mis en oeuvre en quantité telle que le rapport molaire sel métallique/initiateur est compris entre 0,1 et 10 et le métal est représenté par le fer, le cuivre, le cobalt, le nickel, le zinc, l'étain, le titane, le vanadium, le manganèse, le chrome l'argent. L'agent complexant, représenté par les acides mono- et poly-carboxyliques, les acides alkylphosphoriques, les lactones, les cétones, les carbazones, est utilisé en proportion pouvant atteindre la stoechiométrie molaire par rapport au sel métallique.

L'opération de dégazage est réalisée généralement en amenant sous pression réduite le ou les monomères non transformés, le polymérisat étant porté ou maintenu à température au moins égale à 40°C et inférieure à la température de début de dégradation du polymère, ces conditions de pression et de température étant maintenues sensiblement jusqu'à l'arrêt du dégazage. Après dégazage on rétablit la pression atmosphérique avec un gaz inerte tel que l'azote ou plus généralement avec de l'air.

Les polymères du chlorure de vinyle préparés par le procédé de l'invention peuvent être séparés du milieu de polymérisation par tous procédés connus tels que filtration, coagulation-essorage, écaillage, décantation centrifuge, atomisation.

Les polymères du chlorure de vinyle objet de l'invention, sont applicables à la fabrication de feuilles, films, corps creux, matériaux cellulaires, articles moulés par les techniques de calandrage, extrusion, extrusion-soufflage, injection, ainsi qu'à la confection de revêtements enduits et articles moulés par toutes techniques de mise en oeuvre des plastisols et organosols telles qu'enduction, moulage par rotation, trempage, projection.

On donne ci-après, à titre indicatif et non limitatif, des exemples de réalisation du procédé de l'invention.

Dans les exemples 1 à 14 et 43 à 47 le procédé est mis en oeuvre par polymérisation en émulsion.

Dans les exemples 15 à 28 et 48 à 52 le procédé est mis en oeuvre par polymérisation en émulsion en présence d'un produit d'ensemencement, selon la technique décrite dans le brevet français n° 74.32094 publié sous le n° 2286152.

Dans les exemples 29 à 42 et 53 à 57 le procédé est mis en oeuvre par polymérisation en microsuspension en présence de deux produits d'ensemencement, selon la technique décrite dans le brevet français n° 75.13582 publié sous le n° 2309569.

Les exemples 1 à 5, 11 à 19, 25 à 33 et 39 à 42 sont donnés à titre comparatif.

Les exemples 6 à 10, 20 à 24, 34 à 38 et 43 à 57 sont selon l'invention.

La polymérisation est réalisée dans un autoclave en acier inoxydable de 1000 litres de capacité, muni d'une double enveloppe à circulation de fluide et équipé d'un agitateur à pales, à arbre rotatif, d'un déflecteur et d'un réfrigérant condenseur à reflux.

L'agitateur, en forme de cadre, a un diamètre périphérique de 0,75 m et ses pales, plates, une largeur de 75 mm. La distance radiale entre la périphérie des pales et le déflecteur est telle que le gradient de vitesse entre pales et le déflecteur est de 20 s$^{-1}$ pour une vitesse périphérique de rotation de l'agitateur de 1,6 m/s.

Le dégazage est réalisé d'abord par mise en communication directe de l'autoclave avec un gazomètre de stockage du chlorure de vinyle, maintenu sous pression absolue excédant de 50 mbar la pression atmosphérique, jusqu'à équilibre des pressions régnant dans l'autoclave et dans le gazomètre, puis à l'aide d'une pompe à vide aspirant dans l'autoclave et refoulant dans le gazomètre jusqu'à ce que la pression absolue dans l'autoclave corresponde sensiblement à la tension de vapeur d'eau à la température du polymérisat. Après dégazage on rétablit avec de l'air la pression régnant dans l'autoclave.

La quantité de croûtes est déterminée par passage du latex obtenu à travers un tamis d'ouverture de mailles de 500 µm. Elle est représentée par la quantité de polymère refusé audit tamis, en poids par tonne de polymère obtenu.

Exemples 1 à 14 et 43 à 47

On introduit dans l'autoclave 380 kg d'eau désionisée. Après mise sous vide on introduit également:
—400 kg de chlorure de vinyle,
—240 g de soude,
—800 g d'acide laurique,
—95 g de persulfate d'ammonium.

On chauffe sous agitation le mélange réactionnel à 52°C, ce qui correspond à une pression relative de 7,5 bars, et maintient cette température pendant la durée de l'opération de polymérisation et de l'opération de dégazage. Après 1 heure de polymérisation on ajoute en continu, jusqu'à l'instant où la quantité de chaleur, extraite par unité de temps du milieu réactionnel au moyen du fluide de circulation de la double enveloppe, atteint sa valeur maximale, une solution aqueuse de métabisulfite de sodium, à raison de 4 g/h et, en 8 heures, 10 kg d'une solution aqueuse à 15% en poids de dodécylbenzènesulfonate de sodium. En fin de polymérisation, lorsque la baisse de pression est de 3,5 bars ou après une durée de 15 heures, dans le cas où, après cette durée, cette baisse de pression n'est pas atteinte, on dégaze le polymérisat. La durée du dégazage est de 3,5 heures. On ajoute à nouveau 10 kg de la solution aqueuse de dodécylbenzènesulfonate de sodium. On obtient un latex dont le diamètre moyen des particules est de 0,20 µm±0,01 µm.

**Exemples 15 à 28 et 48 à 52**

On introduit dans l'autoclave 310 kg d'eau désionisée. Après mise sous vide on introduit également:
—400 kg de chlorure de vinyle,
—133 g de soude,
—400 g d'acide laurique,
—28 kg d'un latex d'ensemencement de chlorure de polyvinyle à 40% de teneur pondérale en matière sèche, préalablement préparé en émulsion en présence de laurylsulfate de sodium, dont les particules ont un diamètre moyen de 0,30 μm,
—100 g de persulfate d'ammonium.

On chauffe sous agitation le mélange réactionnel à 52°C, ce qui correspond à une pression relative de 7,5 bars, et maintient cette température pendant la durée de l'opération de polymérisation et de l'opération de dégazage. Après 1 heure de polymérisation ou ajoute en continu, jusqu'à l'instant où la qunatité de chaleur, extraite par unité de temps du milieu réactionnel au moyen du fluide de circulation de la double enveloppe, atteint sa valeur maximale, une solution aqueuse de métabisulfite de sodium, à raison de 4 g/h et, en 8 heures, 15 kg d'une solution aqueuse à 15% en poids de dodécylbenzènesulfonate de sodium. En fin de polymérisation, lorsque la baisse de pression est de 3 bars ou après une durée de 15 heures, dans le cas où, après cette durée, cette baisse de pression n'est pas atteinte, on dégaze le polymérisat. La durée du dégazage est de 2,5 heures. On obtient un latex à deux populations de particules de taille différente. La population de grosses particules et la population de fines particules ont des diamètres moyens respectifs de 0,85±0,03 μm et de 0,20±0,01 μm et représentent respectivement 75% et 25% en poids.

**Exemples 29 à 42 et 53 à 57**

On introduit dans l'autoclave 255 kg d'eau désionisée. Après mise sous vide on introduit également:
—400 kg de chlorure de vinyle,
—65 kg d'un latex d'ensemencement de chlorure de polyvinyle à 31,5% de teneur pondérale en matière sèche, préalablement préparé en microsuspension, dont les particules ont un diamètre moyen de 0,507 μm et contenant 1,92%, en poids par rapport au polymère, de peroxyde de lauroyle,
—23 kg d'un latex d'ensemencement de chlorure de polyvinyle à 43,5% de teneur pondérale en matière sèche, préalablement préparé en émulsion, dont les particules ont un diamètre moyen 0,130 μm et ne contenant pas de peroxyde de lauroyle,
—2,8 kg de dodecylbenzènesulfonate de sodium,
—15 g de sulfate de cuivre de formule $CuSO_4, 5 H_2O$,

On chauffe sous agitation le mélange réactionnel à 52°C, ce qui correspond à une pression relative de 7,5 bars, et maintient cette température pendant la durée de l'opération de polymérisation et de l'opération de dégazage. Dès que la température atteint 52°C, on commence une introduction continue d'une solution aqueuse d'acide ascorbique à 0,57 g/l, à raison de 2 l/h, et la poursuit jusqu'à la fin de J'opération de polymérisation. En fin de polymérisation, lorsque la baisse de pression est de 3 bars ou après une durée de 15 heures, dans le cas où, après cette durée, cette baisse de pression n'est pas atteinte, on dégaze de polymérisat. Le durée du dégazage est de 3 heures. On obtient une latex à deux populations de particules de taille différente. La population de grosses particules de la population de fines particules ont des diamètres moyens respectifs de 1,10±0,05 μm et de 0,20±0,01 μm et représentent respectivement 82% et 18% en poids.

Dans tous les exemples le début du reflux du monomère liquéfié provenant du réfrigérant condenseur a lieu 2 heures après la mise en température du milieu réactionnel et la fin dudit reflux a lieu lorsque la baisse de pression atteint 1,5 bar.

Dans les exemples 1 à 42 on maintient la vitesse périphérique de rotation de l'agitateur à une valeur $V_1$ pendant les périodes $P_1$ et $P_3$ et à une valeur $V_2$ pendant les périodes $P_2$ et $P_4$.

Selon les exemples comparatifs 1 à 5, 15 à 19 et 29 à 33 les valeurs $V_1$ et $V_2$ sont égales, c'est-à-dire que la vitesse périphérique de rotation de l'agitateur est constante pendant toute la durée de l'opération de polymérisation et de l'opération de dégazage.

Selon les exemples comparatifs 11 à 14, 25 à 28 et 39 à 42 l'une des valeurs $V_1$ et $V_2$ n'est pas conforme à l'invention.

Dans les exemples 43 à 57 on maintient la vitesse périphérique de rotation de l'agitateur à une valeur $V_1$ pendant deux périodes dont le début est celui respectivement des périodes $P_1$ et $P_3$ et dont la durée représente 85% de la durée respectivement des périodes $P_1$ et $P_3$ et à une valeur $V_2$ pendant deux périodes dont le début est celui respectivement des périodes $P_2$ et $P_4$ et dont la durée représente 85% de la durée respectivement des périodes $P_2$ et $P_4$.

Pendant la fraction complémentaire de la durée de chacune des périodes $P_1$ et $P_3$ on maintient la vitesse périphérique de rotation de l'agitateur à 1,0 m/s.

Pendant la fraction complémentaire de la durée de chacune des périodes $P_2$ et $P_4$ on maintient la vitesse périphérique de rotation de l'agitateur à 1,1 m/s.

Les tableaux 1 et 2 ci-après indiquent respectivement pour chacun des exemples 1 à 42 et pour chacun des exemples 43 à 57:
—la valeur $V_1$ de la vitesse périphérique de rotation de l'agitateur durant tout (tableau 1) ou partie (tableau 2) des périodes $P_1$ et $P_3$,

5

—la valeur $V_2$ et la vitesse périphérique de rotation de l'agitateur durant tout (tableau 1) ou partie (tableau 2) des périodes $P_2$ et $P_4$,

— la durée de polymérisation comptée jusqu'au début du dégazage,

—le taux de transformation du chlorure de vinyle mis en oeuvre,

—la quantité de croûtes.

Dans le cas où le début du dégazage a lieu après une durée de 15 heures, la durée de polymérisation est indiquée (tableau 1) par ">15". Dans ce cas le taux de transformation du chlorure de vinyle mis en oeuvre et la quantité de croûtes indiqués (tableau 1) sont ceux déterminés après 15 heures de polymérisation.

TABLEAU 1

| | Exemples comparatifs | | | | | Exemples selon l'invention | | | | | Exemples comparatifs | | | |
|---|---|---|---|---|---|---|---|---|---|---|---|---|---|---|
| Valeur $V_1$ (m/s) | 0,7 | 0,9 | 1,1 | 1,6 | 1,9 | 1,2 | 1,6 | 2,0 | 1,6 | 1,6 | 1,6 | 1,6 | 0,9 | 2,2 |
| Valeur $V_2$ (m/s) | 0,7 | 0,9 | 1,1 | 1,6 | 1,9 | 0,7 | 0,7 | 0,7 | 0,5 | 0,9 | 0,3 | 1,2 | 0,7 | 0,7 |
| Exemples | 1 | 2 | 3 | 4 | 5 | 6 | 7 | 8 | 9 | 10 | 11 | 12 | 13 | 14 |
| Durée de polymérisation (h) | >15 | >15 | 12,6 | 12,6 | 12,9 | 12,6 | 12,6 | 12,5 | 12,6 | 12,0 | >15 | 12,6 | >15 | 12,6 |
| Taux de transformation (%) | 62,5 | 68,3 | 90,3 | 90,3 | 91,2 | 90,1 | 90,3 | 91,2 | 90,1 | 90,8 | 63,4 | 91,0 | 72,2 | 91,6 |
| Quantité de croûtes (kg) | 9,3 | 9,1 | 7,3 | 12,2 | 16,9 | 3,4 | 3,9 | 4,3 | 3,3 | 4,1 | 4,9 | 10,1 | 4,6 | 15,6 |
| Exemples | 15 | 16 | 17 | 18 | 19 | 20 | 21 | 22 | 23 | 24 | 25 | 26 | 27 | 28 |
| Durée de polymérisation (h) | >15 | >15 | 11,9 | 11,8 | 12,1 | 11,3 | 11,2 | 11,2 | 11,8 | 11,1 | >15 | 11,9 | >15 | 11,9 |
| Taux de transformation (%) | 53,2 | 60,6 | 90,1 | 90,8 | 91,1 | 90,1 | 90,3 | 90,8 | 90,0 | 90,4 | 48,8 | 91,3 | 55,3 | 91,8 |
| Quantité de croûtes (kg) | 11,7 | 11,7 | 9,2 | 14,3 | 19,5 | 4,0 | 4,3 | 4,9 | 3,9 | 4,8 | 8,6 | 13,5 | 8,9 | 14,4 |
| Exemples | 29 | 30 | 31 | 32 | 33 | 34 | 35 | 36 | 37 | 38 | 39 | 40 | 41 | 42 |
| Durée de polymérisation (h) | >15 | >15 | 13,8 | 13,5 | 13,2 | 13,2 | 13,0 | 12,5 | 13,1 | 12,8 | >15 | 13,6 | >15 | 13,2 |
| Taux de transformation (%) | 50,2 | 61,2 | 91,2 | 92,1 | 92,2 | 91,0 | 92,1 | 92,2 | 91,5 | 92,0 | 58,3 | 92,5 | 70,6 | 92,9 |
| Quantité de croûtes (kg) | 10,0 | 9,8 | 7,8 | 13,4 | 19,0 | 3,1 | 4,0 | 4,4 | 3,3 | 4,7 | 5,1 | 12,1 | 7,1 | 13,5 |

EP 0 254 615 B1

# EP 0 254 615 B1

TABLEAU 2

| | Exemples selon l'invention | | | | |
|---|---|---|---|---|---|
| Valeur $V_1$ (m/s) | 1,2 | 1,6 | 2,0 | 1,6 | 1,6 |
| Valeur $V_2$ (m/s) | 0,7 | 0,7 | 0,7 | 0,5 | 0,9 |
| Exemples | 43 | 44 | 45 | 46 | 47 |
| Durée de polymérisation (h) | 12,6 | 12,5 | 12,6 | 12,6 | 12,3 |
| Taux de transformation (%) | 90,2 | 90,3 | 91,1 | 90,0 | 90,2 |
| Quantité de croûtes (kg) | 3,7 | 4,4 | 4,5 | 3,5 | 4,3 |
| Exemples | 48 | 49 | 50 | 51 | 52 |
| Durée de polymérisation (h) | 11,5 | 11,3 | 11,4 | 11,8 | 11,3 |
| Taux de transformation (%) | 90,1 | 90,2 | 90,6 | 90,0 | 90,3 |
| Quantité de croûtes (kg) | 4,2 | 4,2 | 4,9 | 4,3 | 4,8 |
| Exemples | 53 | 54 | 55 | 56 | 57 |
| Durée de polymérisation (h) | 13,2 | 13,1 | 12,7 | 13,1 | 12,9 |
| Taux de transformation (%) | 91,0 | 91,8 | 91,9 | 91,5 | 92,0 |
| Quantité de croûtes (kg) | 3,2 | 3,8 | 4,2 | 3,5 | 4,7 |

**Revendications**

1. Procédé de préparation d'homo- et co-polymères du chlorure de vinyle sous forme de latex selon lequel on réalise sous agitation une opération de polymérisation en émulsion ou en microsuspension du ou des monomères correspondants, éventuellement en présence d'au moins un produit d'ensemencement, en intensifiant les échanges thermiques par condensation continue d'une fraction de la composition monomère mise en oeuvre, à l'état de vapeurs issues du milieu réactionnel, et par reflux continu dans ledit milieu de cette composition liquéfiée, puis réalise, également sous agitation, une opération de dégazage du polymérisat formé, l'agitation étant assurée au moyen d'un agitateur à pales, à arbre rotatif, et d'au moins un déflecteur, le gradient de vitesse entre les pales et le déflecteur étant compris entre 5 et 50 s$^{-1}$, caractérisé par le fait que, $P_1$ étant la période de polymérisation qui précède le début du reflux, $P_2$ la période de reflux, $P_3$ la période qui sépare la fin du reflux et le début du dégazage, $P_4$ la période de dégazage, on maintient la vitesse périphérique de rotation de l'agitateur dans l'intervalle de 1,1 à 2,1 m/s pendant 50 à 100% de la durée de chacune des périodes $P_1$ et $P_3$ et dans l'intervalle de 0,4 à 1,0 m/s pendant 50 à 100% de la durée de chacune des périodes $P_2$ et $P_4$.

2. Procédé selon la revendication 1, caractérisé par le fait que l'on maintient la vitesse périphérique de rotation de l'agitateur dans l'intervalle de 1,1 à 2,1 m/s pendant 80 à 100% de la durée de chacune des périodes $P_1$ et $P_3$ et dans l'intervalle de 0,4 à 1,0 m/s pendant 80 à 100% de la durée de chacune des périodes $P_2$ et $P_4$.

3. Procédé selon l'une quelconque des revendications 1 et 2, caractérisé par le fait que l'on maintient la vitesse périphérique de rotation de l'agitateur dans l'intervalle de 1,1 à 2,1 m/s pendant 90 à 100% de la durée de chacune des périodes $P_1$ et $P_3$ et dans l'intervalle de 0,4 à 1,0 m/s pendant 90 à 100% de la durée de chacune des périodes $P_2$ et $P_4$.

4. Procédé selon l'une quelconque des revendications 1 à 3, caractérisé par le fait que, pendant la fraction complémentaire éventuelle de la durée de chacune des périodes $P_1$ et $P_3$, on maintient la vitesse périphérique de rotation de l'agitateur au moins égale à 1,0 m/s.

5. Procédé selon l'une quelconque des revendications 1 à 4, caractérisé par le fait que, pendant la fraction complémentaire éventuelle de la durée de chacune des périodes $P_2$ et $P_4$, on maintient la vitesse périphérique de rotation de l'agitateur au plus égale à 1,1 m/s.

8

# EP 0 254 615 B1

**Patentansprüche**

1. Verfahren zur Herstellung von Vinylchlorid-Homo- und -Copolymeren in Form von Latices, bei dem unter Rühren eine Polymerisation in Emulsion oder in Mikrosuspension des oder der entsprechenden Monomeren, gegebenenfalls in Gegenwart mindestens eines Keimproduktes, durchgeführt wird, wobei der Wärmeaustausch durch kontinuierliche Kondensation eines Anteils des Monomerenansatzes im Zustand von aus dem Reaktionsmedium aufgestiegenen Dämpfen und durch kontinuerlichen Rückfluß dieses verflüssigten Ansatzes in das Medium verstärkt wird, und bei dem ebenfalls unter Rühren das entstandene Polymerisat entgast wird, wobei das Rühren mit Hilfe eines Schaufelrührers, eines Rührers mit rotierender Welle und mindestens einem Ablenkblech sichergestellt wird, wobei der Geschwindigkeitsgradient zwischen den Schaufeln und dem Ablenkblech im Bereich von 5 bis 50 s$^{-1}$ liegt, dadurch gekennzeichnet, daß, wenn $P_1$ die Zeitspanne der Polymerisation vor Beginn des Rückflusses ist, $P_2$ die Zeitspanne des Rückflusses ist, $P_3$ die Zeitspanne zwischen beendetem Rückfluß und Beginn des Entgasens ist, $P_4$ die Zeitspanne des Entgasens ist, man die Umfangs-Rotationsgeschwindigkeit des Rührers während 50 bis 100% der Dauer jeder der Perioden $P_1$ und $P_3$ im Bereich von 1,1 bis 2,1 m/s und während 50 bis 100% der Dauer jeder der Perioden $P_2$ und $P_4$ im Bereich von 0,4 bis 1,0 m/s hält.

2. Verfahren nach Anspruch 1, dadurch gekennzeichnet, daß man die Umfangs-Rotationsgeschwindigkeit des Rührers während 80 bis 100% der Dauer jeder der Perioden $P_1$ und $P_3$ im Bereich von 1,1 bis 2,1 m/s und während 80 bis 100% der Dauer jeder der Perioden $P_2$ und $P_4$ im Bereich von 0,4 bis 1,0 m/s hält.

3. Verfahren nach einem der Ansprüche 1 und 2, dadurch gekennzeichnet, daß man die Umfangs-Rotationsgeschwindigkeit des Rührers während 90 bis 100% der Dauer jeder der Perioden $P_1$ und $P_3$ im Bereich von 1,1 bis 2,1 m/s und während 90 bis 100% der Dauer jeder der Perioden $P_2$ und $P_4$ im Bereich von 0,4 bis 1,0 m/s hält.

4. Verfahren nach einem der Ansprüche 1 bis 3, dadurch gekennzeichnet, daß man während des gegebenenfalls komplementären Anteils der Dauer jeder der Perioden $P_1$ und $P_3$ die Umfangs-Rotationsgeschwindigkeit des Rührers bei mindestens 1,0 m/s hält.

5. Verfahren nach einem der Ansprüche 1 bis 4, dadurch gekennzeichnet, daß man während des gegebenenfalls komplementären Anteils der Dauer jeder der Perioden $P_2$ und $P_4$ die Umfangs-Rotationsgeschwindigkeit des Rührers bei höchstens 1,1 m/s hält.

**Claims**

1. Process for the preparation of vinyl chloride homo- and copolymers in latex form, according to which an operation of polymerization of the corresponding monomer(s) in emulsion or in microsuspension is carried out with stirring, optionally in the presence of at least one seeding product, while intensifying the heat exchanges by continuous condensation of a fraction of the monomeric composition introduced, in the form of vapour originating from the reaction mixhure, and by continuous refluxing of this liquefied composition into the said mixture, and then an operation of degassing of the polymerizate formed is carried out, also with stirring, the stirring being performed by means of a bladed stirrer with a rotary shaft and of at least one baffle, the velocity gradient between the blades and the baffle being between 5 and 50 s$^{-1}$, characterized in that, if $P_1$ is the polymerization period which precedes the beginning of the refluxing, $P_2$ the refluxing period, $P_3$ the period which separates the end of the refluxing and the beginning of the degassing and $P_4$ the degassing period, the peripheral speed of rotation of the stirrer is maintained in the range from 1.1 to 2.1 m/s for 50 to 100% of the duration of each of the periods $P_1$ and $P_3$ and in the range 0.4 to 1.0 m/s during 50 to 100% of the duration of each of the periods $P_2$ and $P_4$.

2. Process according to Claim 1, characterized in that the peripheral speed of rotation of the stirrer is maintained in the range from 1.1 to 2.1 m/s for 80 to 100% of the duration of each of the periods $P_1$ and $P_3$ and in the range from 0.4 to 1.0 m/s for 80 to 100% of the duration of each of the periods $P_2$ and $P_4$.

3. Process according to either of Claims 1 and 2, characterized in that the peripheral speed of rotation of the stirrer is maintained in the range from 1.1 to 2.1 m/s for 90 to 100% of the duration of each of the periods $P_1$ and $P_3$ and in the range from 0.4 to 1.0 m/s for 90 to 100% of the duration of each of the periods $P_2$ and $P_4$.

4. Process according to any one of Claims 1 to 3, characterized in that during the optional additional fraction of the duration of each of the periods $P_1$ and $P_3$ the peripheral speed of rotation of the stirrer is maintained at least equal to 1.0 m/s.

5. Process according to any one of Claims 1 to 4, characterized in that during the optional additional fraction of the duration of each of the periods $P_2$ and $P_4$ the peripheral speed of rotation of the stirrer is maintained not exceeding 1.1 m/s.